# EUROPÄISCHE PATENTSCHRIFT

(11) **EP 1 189 726 B1**
(45) Veröffentlichungstag und Bekanntmachung des Hinweises auf die Patenterteilung: **10.09.2003**
(21) Anmeldenummer: 01919376.2
(22) Anmeldetag: 09.03.2001
(51) Int. Cl.: B23Q 1/62, B23Q 1/56

(54) **WERKZEUGMASCHINE**
MACHINE TOOL
MACHINE-OUTIL

(30) Priorität: 20.04.2000 DE 10019788
(43) Veröffentlichungstag der Anmeldung: 27.03.2002
(73) Patentinhaber: Index-Werke GmbH & Co. KG Hahn & Tessky, 73730 Esslingen (DE)
(72) Erfinder: GROSSMANN, Walter, 73666 Baltmannsweiler (DE)
(74) Vertreter: Beck, Jürgen, Dr. Dipl.-Phys.
(86) Internationale Anmeldenummer: EP0102675
(87) Internationale Veröffentlichungsnummer: WO01081040

(56) Entgegenhaltungen:
- EP-A- 0 788 861
- WO-A-99/08832
- PATENT ABSTRACTS OF JAPAN vol. 014, no. 144 (M-0951), 19. März 1990 (1990-03-19) & JP 02 009550 A (HITACHI LTD), 12. Januar 1990 (1990-01-12)
- PATENT ABSTRACTS OF JAPAN vol. 017, no. 365 (M-1442), 9. Juli 1993 (1993-07-09) & JP 05 057550 A (MATSUSHITA ELECTRIC IND CO LTD), 9. März 1993 (1993-03-09)

## Beschreibung

Die Erfindung betrifft eine Werkzeugmaschine entsprechend dem Oberbegriff des Anspruchs 1, wie z.B. aus der WO99/08832 bekannt. Des weiteren ist eine Werkzeugmaschine bekannt, zum Bearbeiten eines Werkstücks durch eine Relativbewegung zwischen dem Werkstück und einem Werkzeug, umfassend ein Maschinengestell, einen am Maschinengestell angeordneten Träger mit einer ersten Aufnahme für das Werkstück oder das Werkzeug, ein am Maschinengestell angeordnetes Kreuzschlittensystem mit einer zweiten Aufnahme für das Werkzeug bzw. das Werkstück, welche durch das Kreuzschlittensystem relativ zur ersten Aufnahme in Richtung zweier quer zueinander verlaufender Kreuzschlittenbewegungsachsen in einem durch Maximalwege in diesen Kreuzschlittenbewegungsrichtungen festgelegten Bewegungsbereich einer Kreuzschlittenbewegungsfläche bewegbar ist.

Derartige Werkzeugmaschinen sind aus dem Stand der Technik bekannt. Bei diesen ist das Kreuzschlittensystem so aufgebaut, daß es einen ersten Schlitten aufweist, welcher nur in einer ersten Kreuzschlittenbewegungsrichtung bewegbar und durch einen Antrieb antreibbar ist und einen zweiten Schlitten aufweist, welcher auf dem ersten Schlitten angeordnet und nur in Richtung einer zweiten Kreuzschlittenbewegungsrichtung geführt und antreibbar ist.

Bei derartigen Kreuzschlittensystemen sind einerseits hohe Massen bewegbar, so daß entweder die erreichbaren Geschwindigkeiten klein oder die Antriebsleistungen hoch sein müssen, und andererseits addieren sich Ungenauigkeiten in der Führung und eventuell vorhandenes Führungsspiel, woraus eine Beeinträchtigung der Präzision der Bewegung der zweiten Aufnahme relativ zur ersten resultiert.

Der Erfindung liegt daher die Aufgabe zugrunde, eine Werkzeugmaschine der gattungsgemäßen Art hinsichtlich der Eigenschaften des Kreuzschlittensystems zu verbessern.

Diese Aufgabe wird durch die Merkmale des Anspruchs 1 gelöst.

Der Vorteil der erfindungsgemäßen Lösung ist somit darin zu sehen, daß durch das Vorsehen einer einzigen zweidimensionalen Führung die Probleme hinsichtlich Präzision und Spiel reduziert sind und außerdem die bewegten Massen ebenfalls reduziert werden können, da die Notwendigkeit entfällt, auf dem ersten bewegten Schlitten Führung und Antrieb für den zweiten bewegten Schlitten mitzubewegen.

Ferner läßt sich mit der erfindungsgemäßen Lösung in einfacher Weise eine ausreichend große Basis der Führung der zweiten Aufnahme gegenüber dem Maschinengestell und somit eine große Führungssteifigkeit erreichen.

Eine derartige zweidimensionale Führung läßt sich in besonders einfacher Weise dann realisieren, wenn ein erstes der Schlittenelemente mindestens eine sich parallel zur Kreuzschlittenbewegungsfläche erstreckende Führungsoberfläche aufweist und wenn ein zweites der Schlittenelemente mit mindestens einem Stützelement auf dieser Führungsoberfläche abgestützt ist.

Dabei ist es besonders zweckmäßig, wenn die Führungsoberfläche eine Flächenausdehnung in Richtung der Kreuzschlittenbewegungsrichtungen aufweist, die mindestens der Flächenausdehnung des Bewegungsbereichs entspricht.

Durch eine derartige Führungsoberfläche, die beispielsweise als ebene Fläche mit höchster Präzision bearbeitbar ist, läßt sich in einfacher Weise die Präzision der zweidimensionalen Führung erreichen.

Um eine möglichst stabile Abstützung des die zweite Aufnahme tragenden Schlittenelements zu gewährleisten, ist vorzugsweise vorgesehen, daß das erste Schlittenelement zwei im Abstand voneinander angeordnete Führungsoberflächen aufweist.

Hinsichtlich der Flächenausdehnung des bei der Führung des die zweite Aufnahme tragenden Schlittenelements kraftbeaufschlagten Bereichs der Führungsoberfläche sind die unterschiedlichsten Möglichkeiten denkbar. Prinzipiell wäre es denkbar, die Flächenausdehnung dieses kraftbeaufschlagten Bereichs variieren zu lassen, beispielsweise abhängig von der relativen Stellung der Schlittenelemente zueinander.

Da dadurch jedoch Beeinträchtigungen der Führungspräzision auftreten können, ist es besonders vorteilhaft, wenn die Flächenausdehnung des kraftbeaufschlagten Bereichs der Führungsoberfläche in allen Stellungen der Schlittenelemente relativ zueinander ungefähr gleich groß ist.

Besonders einfach läßt sich die Flächenausdehnung des kraftbeaufschlagten Bereichs der Führungsoberfläche dann konstant halten, wenn diese durch die Ausbildung des Stützelements vorgegeben ist und wenn die Flächenausdehnung der Führungsoberfläche so groß ist, daß in allen Stellungen der Schlittenelemente relativ zueinander das Stützelement mit der vorgegebenen Flächenausdehnung auf die Führungsoberfläche wirkt.

Bei Verwendung mehrerer Stützelemente besteht das Problem der Ausrichtung der mehreren Stützelemente relativ zueinander und relativ zur Führungsoberfläche.

Hierfür ist bei einem vorteilhaften Ausführungsbeispiel vorgesehen, daß mindestens eines der Stützelemente relativ zum zweiten Schlittenelement einstellbar ist.

Eine konstruktiv bevorzugte Lösung sieht dabei vor, daß das Stützelement als Stützleiste ausgebildet ist.

Die Führung des zweiten Schlittenelements an dem die Führungsoberfläche aufweisenden ersten Schlittenelement kann dabei in unterschiedlichster Art und Weise erfolgen. Beispielsweise wäre es denkbar, das zweite Schlittenelement ebenfalls mit einer Führungsoberfläche und auf dieser aufliegenden Wälzkörpers als Stützelement zu versehen, so daß zwischen den beiden Führungsoberflächen die Wälzkörper wirken, mit welchen die Führungsoberflächen aneinander abgestützt sind, wobei sich die Wälzkörper in beiden Kreuzschlittenbewegungsrichtungen auf den Führungsoberflächen abwälzen können.

Aufgrund ihrer konstruktiven Einfachheit ist jedoch eine Lösung besonders vorteilhaft, bei welcher die mindestens eine sich parallel zur Kreuzschlittenbewegungsfläche erstreckende Führungsoberfläche als mindestens eine Gleitoberfläche ausgebildet ist und das zweite Schlittenelement durch mindestens eine auf der mindestens einen Gleitoberfläche aufliegende Gleitstützfläche des Stützelements relativ zur Kreuzschlittenbewegungsfläche kippfest, jedoch in dieser zweidimensional verschiebbar geführt ist.

Der Vorteil dieser Lösung ist darin zu sehen, daß die Notwendigkeit des Vorsehens von Wälzkörpern entfällt und in einfacher Weise auch große, auf die Führungsoberfläche wirkende Kräfte aufgenommen werden können. Außerdem hat die Gleitführung den Vorteil einer großen Dämpfung.

Um insbesondere im Fall einer Gleitoberfläche als Führungsoberfläche und einer auf diese Gleitoberfläche wirkenden Stützfläche den kraftbeaufschlagten Bereich der Gleitoberfläche gleich groß zu halten, ist vorzugsweise vorgesehen, daß die Gleitstützfläche eine kleinere Flächenausdehnung aufweist als die Gleitoberfläche und daß die Gleitstützfläche in jeder Stellung der Schlittenelemente relativ zueinander vollflächig auf der Gleitoberfläche aufliegt.

Besonders günstig läßt sich dies dadurch realisieren, daß die Stützfläche an einem einstellbaren Stützelement gehalten ist, so daß mit diesem einstellbaren Stützelement, insbesondere beim Vorsehen mehrerer Stützflächen, eine präzise Einstellung der Führung an der Gleitoberfläche möglich ist.

Eine besonders günstige Lösung der Abstützung der zweiten Aufnahme sieht dabei vor, daß das Stützelement an dem die zweite Aufnahme tragenden Schlittenelement angeordnet ist. Diese Lösung hat den Vorteil, daß das Stützelement in allen Stellungen des die zweite Aufnahme tragenden Schlittenelements stets in konstantem Abstand zur zweiten Aufnahme angeordnet ist und somit unabhängig von den Stellungen der Schlittenelemente relativ zueinander die Abstützung des die zweite Aufnahme tragenden Schlittenelements an dem am Maschinengestell abgestützten Schlittenelement stets über die Stützelemente und somit stets in derselben geometrischen Relation zur zweiten Aufnahme erfolgt, während beispielsweise bei einem Kreuzschlittensystem, aufgebaut aus zwei Linearführungen, die Abstützung der von dem Kreuzschlittensystem getragenen Aufnahme relativ zu den am Maschinengestell abgestützten Linearführungen dadurch variiert, daß die zweite Aufnahme längs der weiteren quer dazu verlaufenden Linearführung in verschiedene Positionen bringbar ist.

Dieser Vorteil der erfindungsgemäßen Lösung führt zu einer Steigerung der Präzision der Bearbeitung der Werkzeugmaschine, da die durch die geometrische Anordnung der zweiten Aufnahme relativ zu den Stützelementen überhaupt möglichen Deformationen von der Stellung der Schlittenelemente relativ zueinander unabhängig sind.

Im Rahmen der bisherigen Erläuterung der erfindungsgemäßen Lösung wurde nicht näher darauf eingegangen, wie die Kreuzschlittenbewegungsfläche relativ zu den für die Bearbeitung der Werkzeugmaschine erforderlichen Achsen ausgerichtet sein soll.

Theoretisch wäre es möglich, die Kreuzschlittenbewegungsfläche parallel zu X- und Y-Achse der Werkzeugmaschine anzuordnen.

Eine besonders günstige Lösung sieht jedoch vor, daß die Kreuzschlittenbewegungsfläche parallel zu einer durch die X-Achse und die Z-Achse der Werkzeugmaschine aufgespannte Bewegungsebene verläuft.

Diese Lösung hat den Vorteil, daß sich Ungenauigkeiten der Führung der Schlittenelemente relativ zueinander in der Kreuzschlittenbewegungsfläche nur unwesentlich auf die Präzision der Bearbeitung auswirken, da sie nur eine Bewegung des die zweite Aufnahme tragenden Schlittenelements quer zu der Bewegungsebene bewirken und somit keinen unmittelbaren Einfluß auf die Position in der Bewegungsebene haben, so daß damit die Positionierung in der Bewegungsebene ausschließlich durch die Antriebsvorrichtung und somit die Steuerung definiert ist.

Damit läßt sich insbesondere bei von der Maschinensteuerung gesteuerten Antriebsvorrichtungen die Präzision der Werkzeugmaschine im wesentlichen durch die durch die Steuerung vorgebbaren Positionen bestimmen und ist nicht nennenswert negativ durch Führungsungenauigkeiten beeinflußt.

Eine weitere vorteilhafte Lösung sieht vor, daß Führungsflächen des am Maschinengestell abgestützten Schlittenelements beiderseits eines Durchbruchs liegen, welchen ein Basiskörper des die zweite Aufnahme tragenden Schlittenelements durchsetzt. Damit ist eine besonders einfache Konstruktion möglich, mit welcher in einfacher Weise ein Zugang zur zweiten Aufnahme von einer dieser abgewandten Seite des die zweite Aufnahme tragenden Schlittenelements realisierbar ist.

Eine besonders günstige Lösung sieht beispielsweise vor, daß ein Antrieb für die zweite Aufnahme auf einer der zweiten Aufnahme gegenüberliegenden Seite des den Durchbruch durchsetzenden Basiskörpers des die zweite Aufnahme tragenden Schlittenelements liegt.

Ein derartiger Antrieb kann beispielsweise dann, wenn die zweite Aufnahme als Werkzeugrevolver ausgebildet ist, dazu dienen, den Werkzeugrevolver bei der Ausführung von Schaltbewegungen anzutreiben.

Es ist aber auch denkbar, daß ein Antrieb für die zweite Aufnahme dazu dient, in der zweiten Aufnahme angeordnete Werkzeuge selbst anzutreiben.

Hinsichtlich der Ausbildung der Werkzeugmaschine wurde bislang lediglich festgelegt, daß in einer der Aufnahmen ein Werkstück und in der anderen Aufnahme ein Werkzeug angeordnet werden kann.

Beispielsweise wäre es dabei denkbar, daß ein stationär in der einen Aufnahme gehaltenes Werkstück durch ein in der anderen Aufnahme gehaltenes rotierendes Werkzeug bearbeitet wird.

In diesem Fall ist die Aufnahme lediglich eine sogenannte Aufspannung für das Werkstück, relativ zu welcher das rotierende Werkzeug bewegt wird.

Eine besonders günstige Lösung sieht jedoch vor, daß die eine Aufnahme als Werkstückspindel und die andere Aufnahme als Werkzeugträger ausgebildet ist. In diesem Fall besteht die Möglichkeit, sogenannte klassische Drehbearbeitungen vorzunehmen, bei welchen das Werkstück durch die Werkstückspindel in Rotation versetzt wird.

Die Werkzeuge können dabei entweder klassische stationäre Drehwerkzeuge oder auch rotierend angetriebene Werkzeuge sein.

Darüber hinaus besteht mit einer derartigen Werkstückspindel auch die Möglichkeit, Bearbeitungen des Werkstücks durch Drehung desselben mittels einer durch eine Maschinensteuerung gesteuerten C-Achsbewegung durchzuführen.

Im Fall einer als Werkstückspindel ausgebildeten Aufnahme ist es besonders vorteilhaft, wenn die Kreuzschlittenbewegungsfläche parallel zu einer Spindelachse der als Werkstückspindel ausgebildeten Aufnahme und parallel zu einer Richtung quer zur Spindelachse verläuft.

In diesem Fall wirken sich die Ungenauigkeiten der Führung der Schlittenelemente relativ zueinander in der Kreuzschlittenbewegungsfläche besonders unwesentlich auf die Präzision der Bearbeitung aus, da sie nur zu einer unwesentlichen oder vernachlässigbaren Veränderung des Abstands zwischen Werkstück und Spindelachse führen, während die Positionierung von Werkstück und Werkzeugträger relativ zueinander in der Bewegungsebene exakt durch die Antriebsvorrichtung vorgebbar ist.

Um sicherzustellen, daß das Stützelement stets auf der Führungsoberfläche in Anlage bleibt und nicht von dieser abhebt, ist bei einer vorteilhaften erfindungsgemäßen Lösung eine Niederhalteeinrichtung vorgesehen, welche das mindestens eine Stützelement an der mindestens einen Führungsoberfläche anliegend hält.

Die Niederhalteeinrichtung kann dabei in unterschiedlichster Art und Weise ausgebildet sein. Beispielsweise besteht die Möglichkeit, die Niederhalteeinrichtung so auszubilden, daß sie stets mit einer Kraft das Stützelement an der Führungsoberfläche in Anlage hält.

Diese Kraft kann beispielsweise durch eine Druckkraft erzeugende Einrichtung erfolgen, welche beispielsweise als hydrostatisches Gleitlager oder auch als das Stützelement in Richtung der Führungsoberfläche beaufschlagender Antrieb ausgebildet sein kann.

Eine die Führungseigenschaften der zweidimensionalen Führung vorteilhaft unterstützende Lösung sieht dabei vor, daß die Niederhalteeinrichtung mindestens eine weitere, sich parallel zur Kreuzschlittenbewegungsfläche erstreckende Führungsoberfläche aufweist, deren Flächenausdehnung in Richtung der Kreuzschlittenbewegungsrichtungen mindestens der Flächenausdehnung des Bewegungsbereichs entspricht und ein weiteres Stützelement aufweist, welches auf die Führungsoberfläche wirkt.

Prinzipiell können die weitere Führungsoberfläche und das weitere Stützelement beliebig an den Schlittenelementen angeordnet werden. Konstruktiv besonders vorteilhaft ist es jedoch, wenn die weitere Führungsoberfläche an dem ersten Schlittenelement angeordnet ist und das weitere Stützelement an dem zweiten Schlittenelement.

Besonders günstig ist es dabei, wenn das erste Schlittenelement auf einer Seite mit der Führungsoberfläche versehen ist und auf einer gegenüberliegenden Seite mit der weiteren Führungsoberfläche.

Eine alternative Lösung sieht dabei vor, daß die Führungsoberfläche und die weitere Führungsoberfläche einander zugewandt an einem Grundkörper des ersten Schlittenelements angeordnet sind.

Vorzugsweise sind dabei in den Fällen der Anordnung der Führungsoberfläche und der weiteren Führungsoberfläche am ersten Schlittenelement jeweils das Stützelement und das weitere Stützelement am zweiten Schlittenelement angeordnet.

Hinsichtlich der Anordnung der Antriebsvorrichtung relativ zu den Schlittenelementen und der zweiten Aufnahme wurden bislang keine näheren Angaben gemacht.

So sieht die erfindungsgemäße Lösung vor, daß die Antriebsvorrichtung auf einer der zweiten Aufnahme gegenüberliegenden Seite des die zweite Aufnahme tragenden Schlittenelements angreift.

Damit besteht die Möglichkeit, die Antriebsvorrichtung so anzuordnen, daß sie außerhalb eines Arbeitsraums liegt, in welchem die zweite Aufnahme zur Positionierung des Werkstücks oder Werkzeugs angeordnet ist.

Damit ist insbesondere im Fall einer spanabhebenden Bearbeitung die Möglichkeit gegeben, die Antriebsvorrichtung außerhalb des schmutzbelasteten Arbeitsraums vorzusehen.

Besonders zweckmäßig ist es auch, wenn die Antriebsvorrichtung auf einer der zweiten Aufnahme gegenüberliegenden Seite des am Maschinengestell abgestützten Schlittenelements angeordnet ist, so daß die Antriebsvorrichtung damit völlig außerhalb des Arbeitsraums liegt.

Eine andere günstige Lösung sieht vor, daß die Antriebsvorrichtung auf einer der zweiten Aufnahme gegenüberliegenden Seite eines Maschinenbettkörpers angeordnet ist, an welchem das am Maschinengestell abgestützte Schlittenelement fixiert ist, so daß zwangsläufig durch den gesamten Maschinenbettkörper und das an diesem abgestützte Schlittenelement die gesamte Antriebsvorrichtung vorteilhaft angeordnet werden kann und sich insbesondere das Vorsehen von aufwendigen Abdeckungen zum Schutz der Antriebsvorrichtung selbst erübrigt und folglich lediglich Abdeckungen zum Schutz der Flächen vorzusehen sind, mit welchen die Schlittenelemente relativ zueinander gleiten.

Hinsichtlich der Antriebsvorrichtung für das die zweite Aufnahme tragende Schlittenelement wurden im Zusammenhang mit der bisherigen Erläuterung der einzelnen Ausführungsbeispiele keine näheren Angaben gemacht. Erforderlich ist es im Sinne der erfindungsgemäßen Lösung jedoch, daß die Antriebsvorrichtung nicht nur eine eindeutige Position der Schlittenelemente relativ zueinander vorgibt, sondern auch eine eindeutige Ausrichtung der Schlittenelemente relativ zueinander.

Insbesondere dann, wenn es von Bedeutung ist, daß die zweite Aufnahme in geeigneter Drehausrichtung zur ersten Aufnahme positioniert ist, ist es von Vorteil, wenn die Antriebsvorrichtung so ausgebildet ist, daß sie die Schlittenelemente stets in derselben Ausrichtung relativ zueinander bewegt, d. h., daß die Schlittenelemente zwar zweidimensional relativ zueinander bewegbar sind, die einmal bestehende Ausrichtung der Schlittenelemente relativ zueinander jedoch in allen Stellungen bei der zweidimensionalen Bewegung aufrechterhalten bleibt.

Dies läßt sich grundsätzlich durch eine entsprechende Ansteuerung der Antriebsvorrichtung beim Bewegen des Schlittenelements erreichen, wenn die Antriebsvorrichtung so ausgebildet ist, daß sie alle möglichen Bewegungen des Schlittenelements zuläßt.

Besonders günstig läßt sich dies dann realisieren, wenn die Antriebsvorrichtung eine zumindest teilweise mechanische Parallelführung für die Schlittenelemente bildet.

Prinzipiell wäre es denkbar, die Antriebsvorrichtung als konventionelle zweidimensionale Antriebsvorrichtung, d. h. mit zwei jeweils in einer der Kreuzschlittenbewegungsrichtungen wirksamen eindimensionalen Antrieben auszubilden.

Eine besonders günstige Lösung sieht jedoch vor, daß die Antriebsvorrichtung an dem die zweite Aufnahme tragenden Schlittenelement an mindestens zwei im Abstand voneinander. angeordneten Angriffspunkten mit drei sich in mindestens zwei verschiedenen Richtungen erstreckenden, mit einer Maschinensteuerung ansteuerbaren Antriebsstreben mit einem Gelenkkopf angreift und daß die Angriffspunkte mittels der drei Antriebsstreben relativ zum ersten Schlittenelement definiert positionierbar sind.

Eine derartige Lösung hat den großen Vorteil, daß sich mit dieser die bewegten Massen aufgrund der Antriebsvorrichtung in erheblichem Maße reduzieren lassen.

Vorzugsweise ist dabei vorgesehen, daß jede der Antriebsstreben ihrerseits wiederum gelenkig in einem Schwenklager relativ zum anderen Schlittenelement gelagert ist und jeder der Antriebsstreben ein Linearantrieb zugeordnet ist.

Dabei besteht die Möglichkeit, die Antriebsstreben längeninvariant auszubilden und die Schwenklager durch die Linearantriebe zu bewegen, so daß sich die Bewegung jedes Schwenklagers durch die längeninvariante Antriebsstrebe auf den Angriffspunkt am das die zweite Aufnahme tragenden Schlittenelement überträgt.

Alternativ dazu sieht eine besonders günstige Lösung vor, daß die Schwenklager relativ zum anderen Schlittenelement stationär angeordnet sind und daß die Antriebsstreben mittels des zugeordneten Linearantriebs längenvariabel ausgebildet sind.

Eine derartige längenvariable Ausbildung einer Antriebsstrebe läßt sich besonders einfach dann realisieren, wenn die Antriebsstrebe mittels eines Spindelantriebs längenvariabel einstellbar ist.

Eine besonders günstige Lösung sieht dabei vor, daß ein Antriebsmotor für den Linearantrieb im Bereich des Schwenklagers angeordnet ist, so daß dieser Antriebsmotor nicht relativ zum Schwenklager mitbewegt werden muß, sondern lediglich um das Schwenklager mitgedreht werden muß, wodurch eine erhebliche Reduktion der auftretenden Trägheitskräfte erreichbar ist.

Eine besonders günstige Führung des die zweite Aufnahme tragenden Schlittenelements läßt sich dann erreichen, wenn zwei der Antriebsstreben eine Parallelogrammführung bilden.

Eine derartige Bildung einer Parallelführung durch zwei Antriebsstreben läßt sich entweder bei längeninvarianten Antriebsstreben dadurch erreichen, daß deren Schwenklager entweder durch eine Linearbewegungseinrichtung oder durch zwei synchronisierte Linearbewegungseinrichtungen parallel zu einer Richtung bewegt werden.

Eine andere Lösung sieht vor, daß bei längenvariablen Antriebsstreben die beiden Antriebsstreben durch die Maschinensteuerung synchron längeneinstellbar sind.

Beispielsweise läßt sich dies über eine Steuerung erreichen, die die Antriebsmotoren für die Längeneinstellung derart ansteuert, daß beide Antriebsstreben stets dieselbe Länge aufweisen.

Weitere Merkmale der Erfindung sind Gegenstand der nachfolgenden Beschreibung sowie der zeichnerischen Darstellung einiger Ausführungsbeispiele. In der Zeichnung zeigen:
- Fig. 1: eine Seitenansicht eines ersten Ausführungsbeispiels einer erfindungsgemäßen Werkzeugmaschine in Richtung des Pfeils A in Fig. 2;
- Fig. 2: eine Ansicht des ersten Ausführungsbeispiels in Richtung des Pfeils in Fig. 1;
- Fig. 3: einen Schnitt längs Linie 3-3 in Fig. 2 ohne Darstellung einer Antriebsvorrichtung;
- Fig. 4: einen Schnitt längs Linie 4-4 in Fig. 3;
- Fig. 5: eine Darstellung einer Variante des ersten Ausführungsbeispiels entsprechend Fig. 4;
- Fig. 6: eine Darstellung ähnlich Fig. 3 eines zweiten Ausführungsbeispiels einer erfindungsgemäßen Werkzeugmaschine;
- Fig. 7: eine Darstellung ähnlich Fig. 3 eines dritten Ausführungsbeispiels einer erfindungsgemäßen Werkzeugmaschine;
- Fig. 8: eine Darstellung ähnlich Fig. 3 eines vierten Ausführungsbeispiels einer erfindungsgemäßen Werkzeugmaschine;
- Fig. 9: eine Darstellung des ersten Ausführungsbeispiels entsprechend Fig. 3 mit einer erfindungsgemäßen Antriebsvorrichtung;
- Fig. 10: eine Draufsicht in Richtung des Pfeils C in Fig. 9 und
- Fig. 11: einen Schnitt längs Linie 11-11 in Fig. 10.

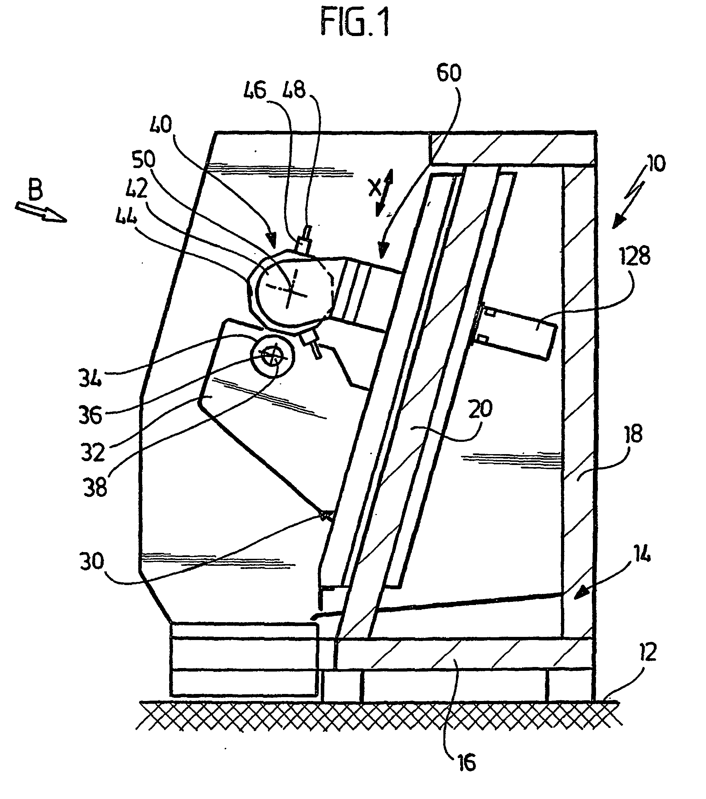

Ein Ausführungsbeispiel einer erfindungsgemäßen Werkzeugmaschine, dargestellt in Fig. 1, umfaßt ein als Ganzes mit 10 bezeichnetes Maschinengestell, welches mit einem auf einer Grundfläche 12 aufsitzenden Rahmen 14 versehen ist, der beispielsweise ungefähr parallel zur Grundfläche 12 verlaufende Grundträger 16 und sich über diesen erhebende und quer zur Grundfläche 12 verlaufende Träger 18 aufweist, welche schräg zur Grundfläche 12 verlaufende Bettträger 20 halten.

An den Bettträgern 20 des Rahmens 14 ist ein als Ganzes mit 30 bezeichneter Maschinenbettkörper gehalten, welcher vorzugsweise ähnlich einer Platte ausgebildet ist.

Auf diesem Maschinenbettkörper 30 sitzt ein Spindelkasten 32, in welchem im Fall einer Drehmaschine eine Werkstückspindel 34 um eine Spindelachse 36 drehbar gelagert ist.

Zur Bearbeitung eines in der eine erste Aufnahme darstellenden Werkstückspindel 34 aufgenommenen Werkstücks 38 ist ein als Ganzes mit 40 bezeichneter und eine zweite Aufnahme darstellender Werkzeugträger vorgesehen, welcher beispielsweise als Revolver ausgebildet ist und einen drehbar an einem Revolvergehäuse 42 gelagerten Revolverkopf 44 aufweist, an welchem Werkzeughalter 46 mit Bearbeitungswerkzeugen 48 montiert sind. Durch Drehen des Revolverkopfes 44 um eine Revolverachse 50 sind dabei unterschiedliche Werkzeuge 48 am Werkstück 38 zum Einsatz bringbar.

Der gesamte Werkzeugträger 40 wird von einem als Ganzes mit 60 bezeichneten Kreuzschlittensystem gehalten, mit welchem der Werkzeugträger 40 in Richtung einer Z-Achse parallel zur Spindelachse 36 und in Richtung einer X-Achse quer zur Spindelachse 36, vorzugsweise senkrecht zu dieser, bewegbar ist.

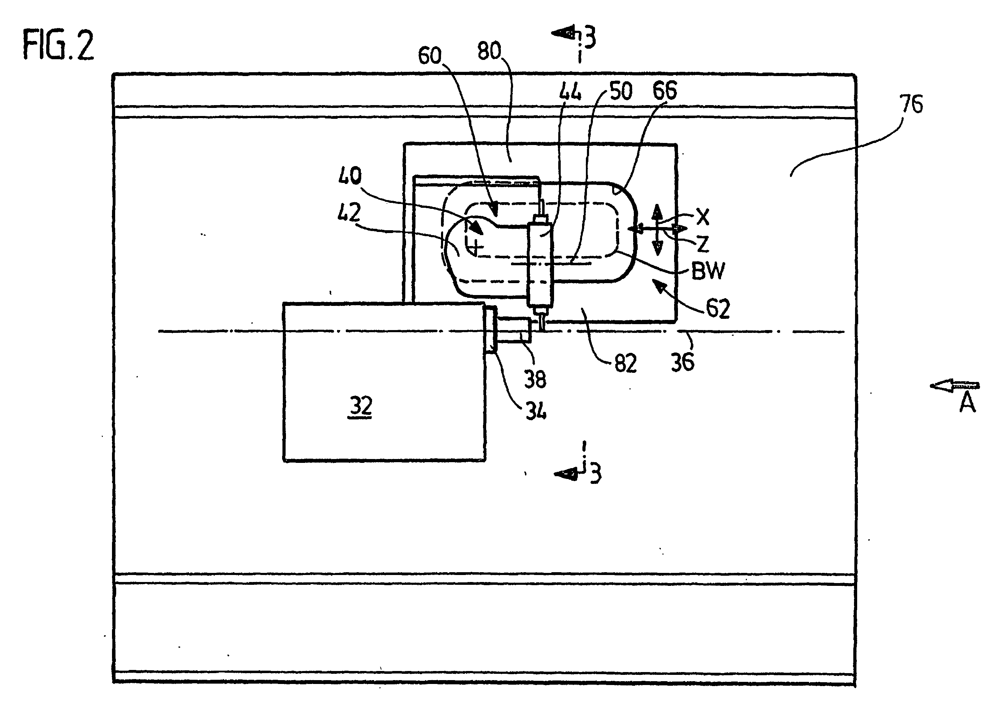

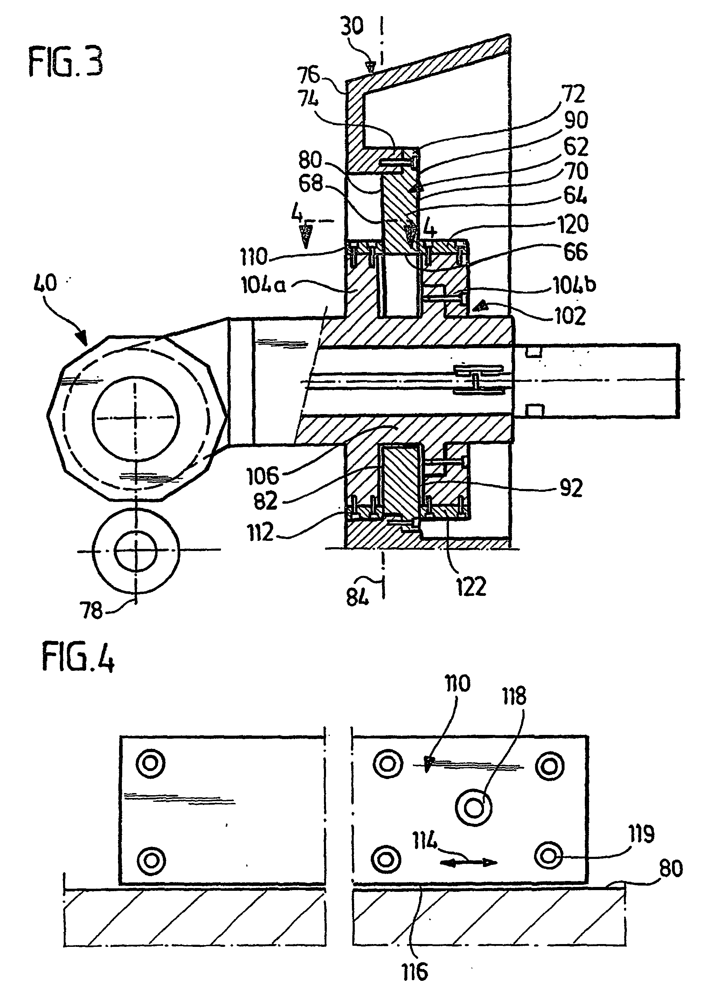

Das Kreuzschlittensystem 60 umfaßt, wie in Fig. 2 und 3 dargestellt, ein maschinenbettseitiges Schlittenelement 62, welches in Form einer Platte 64 mit einem Durchbruch 66 in einem mittleren Bereich derselben ausgebildet ist und um den Durchbruch 66 herum im wesentlichen parallel zueinander verlaufende Oberflächen 68 und 70 aufweist.

Die Platte 64 ist dabei beispielsweise mit ihrem äußeren Rand 72 an einem Haltewulst 74 des Maschinenbettkörpers 30 fixiert, und zwar so, daß die Oberfläche 68 gegenüber einer Oberfläche 76 des Maschinenbettkörpers 30 zurückgesetzt verläuft.

Das erste Schlittenelement 62 bildet auf gegenüberliegenden Seiten des Durchbruchs 66 liegende und sich vorzugsweise in Richtung einer Achse, beispielsweise in Richtung der Z-Achse, erstreckende Gleitoberflächen 80 und 82, die beide parallel zu einer Kreuzschlittenbewegungsfläche 84 verlaufen, die ihrerseits wiederum parallel zu einer von der X-Achse und der Z-Achse aufgespannten Bearbeitungsebene 78 ausgerichtet ist, welche beispielsweise durch die Spindelachse 36 hindurch verläuft.

Diese Kreuzschlittenbewegungsfläche 84 definiert die Ausrichtung des Werkzeugträgers 40 in allen Stellungen desselben in Richtung der X-Achse und der Z-Achse relativ zum Maschinenbettkörper 30.

Im einfachsten Fall sind die Gleitoberflächen 80 und 82 Teilbereiche der insgesamt als Planfläche bearbeiteten Oberfläche 68 der Platte 64, es ist aber auch denkbar, die Gleitoberflächen 80 und 82 durch eine zusätzliche Präzisionsbearbeitung exakt parallel zur Kreuzschlittenbewegungsfläche 84 auszuführen und im übrigen an die Oberfläche 68 der Platte 64 geringere Anforderungen zu stellen.

Darüber hinaus ist die Platte 64 auf ihrer den Gleitoberflächen 80 und 82 gegenüberliegenden Seite mit Gleitoberflächen 90 und 92 versehen, die ebenfalls auf gegenüberliegenden Seiten des Durchbruchs 66 liegen und im einfachsten Fall dieselbe Ausdehnung wie die Gleitoberflächen 80 und 82 aufweisen und deckungsgleich zu den Gleitoberflächen 80 und 82 angeordnet sind.

Auch die Gleitoberflächen 90 und 92 verlaufen parallel zur Kreuzschlittenbewegungsfläche 84 und können im einfachsten Fall Teilbereiche der Oberfläche 70 der Platte 64 sein, es ist aber in gleicher Weise wie im Fall der Gleitoberflächen 80 und 82 denkbar, die Gleitoberflächen 90 und 92 als separate, durch Präzisionsbearbeitung parallel zur Kreuzschlittenbewegungsfläche 84 ausgerichtete Flächen auszubilden.

Das maschinenbettseitige Schlittenelement 62 führt nun seinerseits ein als Ganzes mit 102 bezeichnetes werkzeugträgerseitiges Schlittenelement, welches einen die Gleitoberflächen 80 und 82 zumindest partiell übergreifenden oberen Führungskörper 104a und einen die Gleitoberflächen 90 und 92 zumindest teilweise übergreifenden unteren Führungskörper 104b sowie einen den Durchbruch 66 durchsetzenden Basiskörper 106 aufweist, welcher die beiden Führungskörper 104a und 104b miteinander verbindet.

Der Führungskörper 104a trägt seinerseits Stützleisten 110 und 112, welche in allen Stellungen des werkzeugträgerseitigen Schlittenelements 102 auf den Gleitoberflächen 80 und 82 aufliegen, um das werkzeugträgerseitige Schlittenelement 102 in präziser Ausrichtung zur Kreuzschlittenbewegungsfläche 84 zu führen.

Ferner ist der Führungskörper 104b ebenfalls mit Stützleisten 120 und 122 versehen, welche in allen Stellungen des werkzeugträgerseitigen Schlittenelements 102 auf den Gleitoberflächen 90 und 92 aufliegen und somit ebenfalls das werkzeugträgerseitige Schlittenelement 102 in definierter Ausrichtung zur Kreuzschlittenbewegungsfläche 84 führen.

Vorzugsweise weisen, wie in Fig. 2 dargestellt, die Gleitoberflächen 80 und 82 eine derartige Flächenausdehnung in Richtung der Kreuzschlittenbewegungsrichtungen X und Z und somit parallel zur Kreuzschlittenbewegungsfläche 84 auf, daß die Stützleisten 110 und 112 in allen innerhalb eines durch die Maximalwege in Richtung der X-Achse und der Z-Achse festgelegten Bewegungsbereichs BW liegenden Relativstellungen des werkzeugträgerseitigen Schlittenelements 102 relativ zum maschinenbettseitigen Schlittenelement 62 voll abgestützt auf den Gleitoberflächen 80 und 82 aufliegen können.

Die Stützleisten bilden dabei, wie am Beispiel der Stützleiste 110 dargestellt, eine über deren gesamte Erstreckung in deren Längsrichtung 114 verlaufende Gleitstützfläche 116, welche auf der entsprechenden Gleitoberfläche, d. h. in diesem Fall der Gleitoberfläche 80, über ihre gesamte Erstreckung in der Längsrichtung 114 aufliegt.

Um ein möglichst gleichmäßiges Aufliegen der Gleitstützfläche 116 auf der Gleitoberfläche 80 erreichen zu können, ist die Stützleiste 110 vorzugsweise einstellbar am Führungskörper 104a gehalten, wobei als Einstelleinrichtungen 118 beispielsweise Exzenterschrauben vorgesehen sind und außerdem noch als Fixiereinrichtungen Halteschrauben 119, so daß nach einem Lösen der Halteschrauben 119 mittels der Exzenterschrauben 118 die Zustellung der Stützleiste 110 zur Gleitoberfläche 80 einstellbar ist und danach ein Fixieren mittels der Halteschrauben 119 erfolgt.

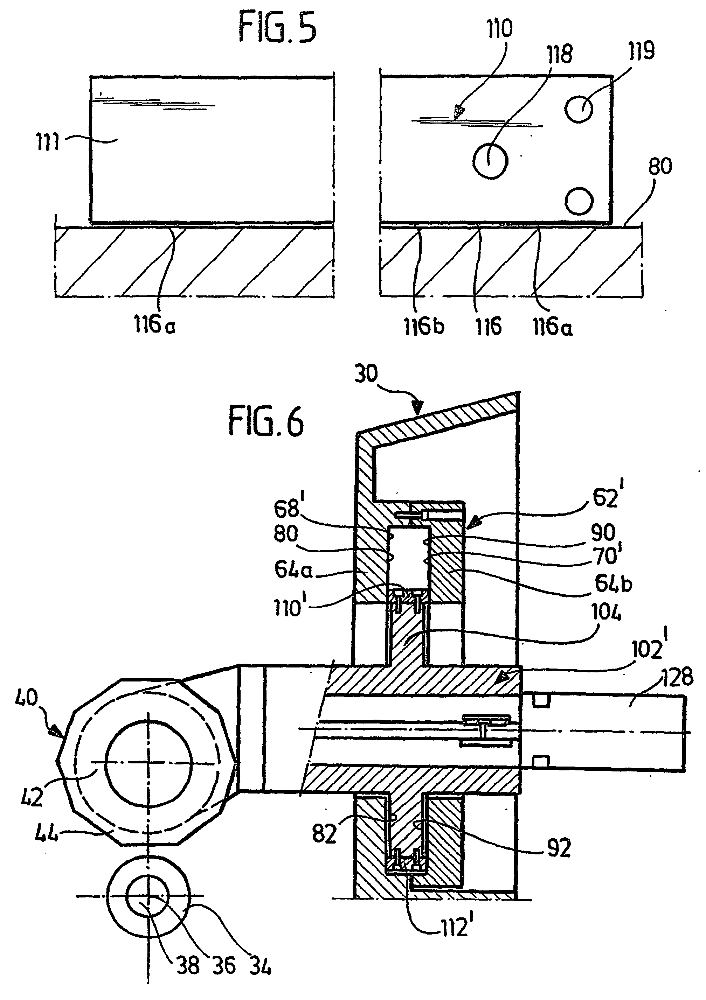

Bei einer Variante des ersten Ausführungsbeispiels, dargestellt in Fig. 5, ist die Stützleiste 110 so ausgebildet, daß die Gleitstützfläche 116 derselben nur in Teilbereichen 116a, beispielsweise äußeren Teilbereichen, derselben trägt, während in einem mittleren Bereich 116b die Gleitstützfläche 116 sich in geringfügigem nicht tragendem Abstand über der Gleitoberfläche 80 bewegt, so daß im wesentlichen die Führung der Stützleiste 110 durch die Gleitoberfläche 80 lediglich durch die tragenden Teilbereiche 116a der Gleitstützfläche 116 erfolgt.

Ferner ist zum Antreiben von antreibbaren Werkzeugen des Werkzeugträgers 40 und beispielsweise auch zum Antreiben des Revolverkopfes 44 relativ zum Revolvergehäuse 42 ein Antriebsmotor 128 auf einer dem Revolvergehäuse 42 gegenüberliegenden Seite des Basiskörpers 106 vorgesehen, der somit auf der der Werkstückspindel 34 und dem Werkzeugträger 40 gegenüberliegenden Seite des Maschinenbettkörpers 30 angeordnet ist.

Durch die erfindungsgemäße Lösung ist es auch möglich, jede Art von Leitungen, beispielsweise für Energie, der zweiten Aufnahme 40 von einer dem Arbeitsraum abgewandten Seite zuzuführen.

Eine derartige Ausbildung der Stützleiste 110' erlaubt eine noch präzisere Zustellung derselben in Bezug auf die Gleitoberfläche 80.

Bei einem zweiten Ausführungsbeispiel einer erfindungsgemäßen Werkzeugmaschine ist, wie in Fig. 6 dargestellt, das maschinenbettseitige Schlittenelement 62' so ausgebildet, daß es zwei parallel zueinander verlaufende Platten 64a und 64b aufweist, die auf ihren einander zugewandten Oberflächen 68' und 70' die Gleitoberflächen 80 und 82 bzw. 90 und 92 tragen.

In diesem Fall ist das werkzeugträgerseitige Schlittenelement 102' lediglich mit einem Führungskörper 104 versehen, welcher sich zwischen die Platten 64a und 64b hineinerstreckt, so daß die Stützleisten 110 und 112 jeweils zwischen den Gleitoberflächen 80 und 90 bzw. 82 und 92 geführt sind und somit beiderseits derselben geführt sind.

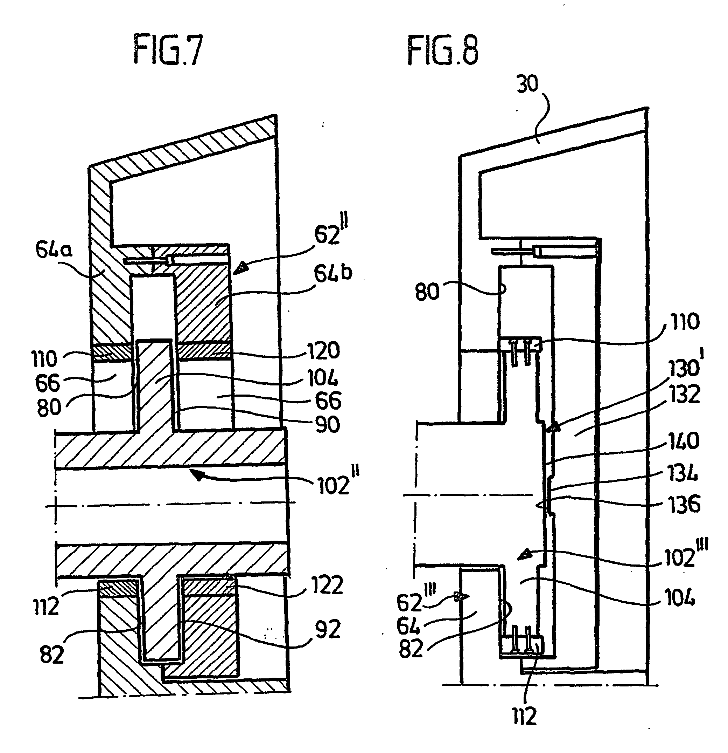

Bei einem dritten Ausführungsbeispiel, dargestellt in Fig. 7, umfaßt, in gleicher Weise wie beim zweiten Ausführungsbeispiel, das maschinenbettseitige Schlittenelement 62" die zwei Platten 64a und 64b, die jedoch nicht die Gleitflächen 80 und 82 sowie 90 und 92 tragen, sondern die Platte 64a trägt auf gegenüberliegenden Seiten des Durchbruchs 66 die Stützleisten 110 und 112 und die Platte 64b auf den dem Durchbruch 66 gegenüberliegenden Seiten die Stützleisten 120 und 122. Ferner ist das werkzeugträgerseitige Schlittenelement 102" im Bereich des einen, sich zwischen die Platten 64a und 64b hineinerstreckenden Führungskörpers 104 mit den Gleitoberflächen 80 und 82 versehen, welche den Stützleisten 110 bzw. 112 zugewandt sind und auf ihrer gegenüberliegenden Seite mit den Gleitflächen 90 und 92, welche den Stützleisten 120 und 122 zugewandt sind, so daß der Führungskörper 104 mit seinen Gleitoberflächen 80 und 90 sowie 82 und 92 zwischen den Stützleisten 110 und 120 bzw. 112 und 122 geführt ist.

Auch bei dem zweiten und dem dritten Ausführungsbeispiel können die Stützleisten mit ihren Stützflächen entweder vollflächig oder nur in Teilbereichen tragen, wie im Zusammenhang mit dem ersten Ausführungsbeispiel unter Verweis auf Fig. 4 und 5 erläutert.

Bei dem ersten, zweiten und dritten Ausführungsbeispiel erfolgt die definierte Führung des werkzeugträgerseitigen Schlittenelements 102 in Richtung der Kreuzschlittenbewegungsfläche 84 durch zwei Sätze 124, 126 von Gleitführungen mit einander gegenüberliegenden Gleitoberflächen, wobei ein Satz 124 von Gleitführungen die Gleitoberflächen 80 und 82 mit den zugeordneten Stützleisten 110 und 112 oder 110' und 112' umfaßt und der andere Satz 126 von Gleitführungen die Gleitoberflächen 90 und 92 mit den zugeordneten Stützelementen 110 und 112 bzw. 110' und 112' umfaßt. Dabei bildet einer 124 oder 126 der Sätze 124, 126 von Gleitführungen die eigentliche Gleitführung, beispielsweise ist dies der Satz 124, und der andere 126 bzw. 124 der Sätze 126, 124 stellt eine Niederhalteeinrichtung 130 dar, die die Gleitoberflächen und Stützleisten der eigentlichen Gleitführung in Anlage hält.

Prinzipiell ist es daher ausreichend, eine definierte Orientierung des werkzeugträgerseitigen Schlittenelements 102 durch einen einzigen Satz von Gleitführungen, beispielsweise dem Satz 124 mit den Gleitoberflächen 80 und 82, vorzugeben, und sicherzustellen, daß diese Gleitoberflächen 80 und 82 und die entsprechenden Stützleisten 110 und 112 stets in Anlage gehalten werden.

Dies ist bei dem vierten Ausführungsbeispiel in Fig. 8 dargestellt.

Dieses vierte Ausführungsbeispiel gemäß Fig. 8 stellt eine Abwandlung des zweiten Ausführungsbeispiels gemäß Fig. 6 dar, wobei das maschinenbettseitige Schlittenelement 62' lediglich die Platte 64 aufweist, welche die Gleitoberflächen 80 und 82 trägt, an welchen die Stützleisten 110 und 112 geführt sind, die am Stützkörper 104 des werkzeugträgerseitigen Schlittenelements 102' gehalten sind.

Die beim vierten Ausführungsbeispiel nicht mehr vorhandenen Gleitflächen 90 und 92 sind durch die als Ganzes mit 130 bezeichnete Niederhalteeinrichtung ersetzt, welche eine Halteplatte 132 aufweist, die fest mit dem Maschinenbettkörper 30 verbunden ist und einen Stützkörper 134 trägt, der mit einer Gleitstützfläche 136 einer Gleitoberfläche 140 am werkzeugträgerseitigen Schlittenelement 102'" zugeordnet ist, wobei die Gleitoberfläche 140 beispielsweise zwischen den Stützleisten 110 und 112, vorzugsweise symmetrisch zwischen diesen angeordnet ist und parallel zu den Gleitoberflächen 80 und 82 verläuft, jedoch am werkzeugträgerseitigen Schlittenelement 102'" diesen abgewandt angeordnet ist, so daß die die Gleitoberfläche 140 beaufschlagende Gleitstützfläche 136 so auf das werkzeugträgerseitige Schlittenelement 102'" einwirkt, daß dieses mit den Stützleisten 110 und 112 stets in Anlage an die die Ausrichtung desselben festlegenden Gleitoberflächen 80 und 82 des maschinenbettseitigen Schlittenelements 62'" geführt ist.

Vorzugsweise bildet die Gleitoberfläche 140 mit der Gleitstützfläche 136 ein hydrostatisches Gleitlager, durch welches eine Kraftbeaufschlagung des werkzeugträgerseitigen Schlittenelements 102'" derart erfolgt, daß die Stützleisten 110, 112 kraftbeaufschlagt an den Gleitoberflächen 80, 82 in Anlage gehalten werden.

Die Gleitoberfläche 140 ist dabei so ausgebildet, daß in allen Stellungen des werkzeugträgerseitigen Schlittenelements 102' die Stützfläche 136 an dieser anliegt.

Im Zusammenhang mit den bislang erläuterten Ausführungsbeispielen wurde lediglich die Art der Führung des werkzeugträgerseitigen Schlittenelements 102 am maschinenbettseitigen Schlittenelement 62 erläutert, jedoch nicht darauf eingegangen, wie ein Antrieb des werkzeugträgerseitigen Schlittenelements 102 relativ zum maschinenbettseitigen Schlittenelement 62 erfolgen soll.

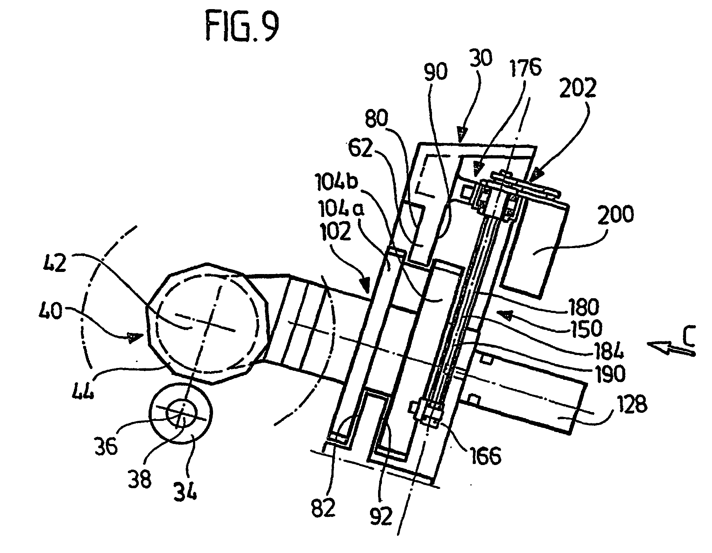

Ein derartiger Antrieb ist anhand des ersten Ausführungsbeispiels in den Figuren 9, 10 und 11 erläutert.

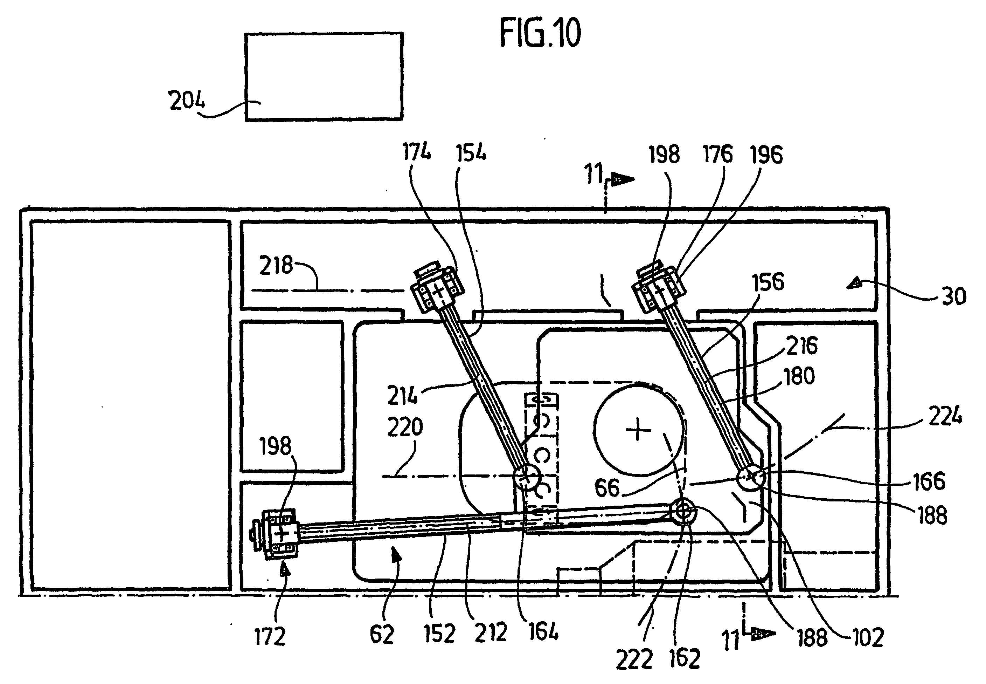

Wie in Fig. 9 und 10 dargestellt, ist auf einer dem Werkzeugträger 40 gegenüberliegenden Seite des Maschinenbettkörpers 30 eine als Ganzes mit 150 bezeichnete Antriebsvorrichtung vorgesehen, welche insgesamt drei Antriebsstreben 152, 154 und 156 umfaßt, wobei jede der Antriebsstreben 152, 154 und 156 mit einem Gelenkkopf 162, 164 und 166 an dem werkzeughalterseitigen Schlittenelement 102 angreift und ihrerseits mit einem Schwenklager 172, 174 und 176 schwenkbar am Maschinenbettkörper 30 außerhalb des maschinenbettseitigen Schlittenelements 62 gelagert ist.

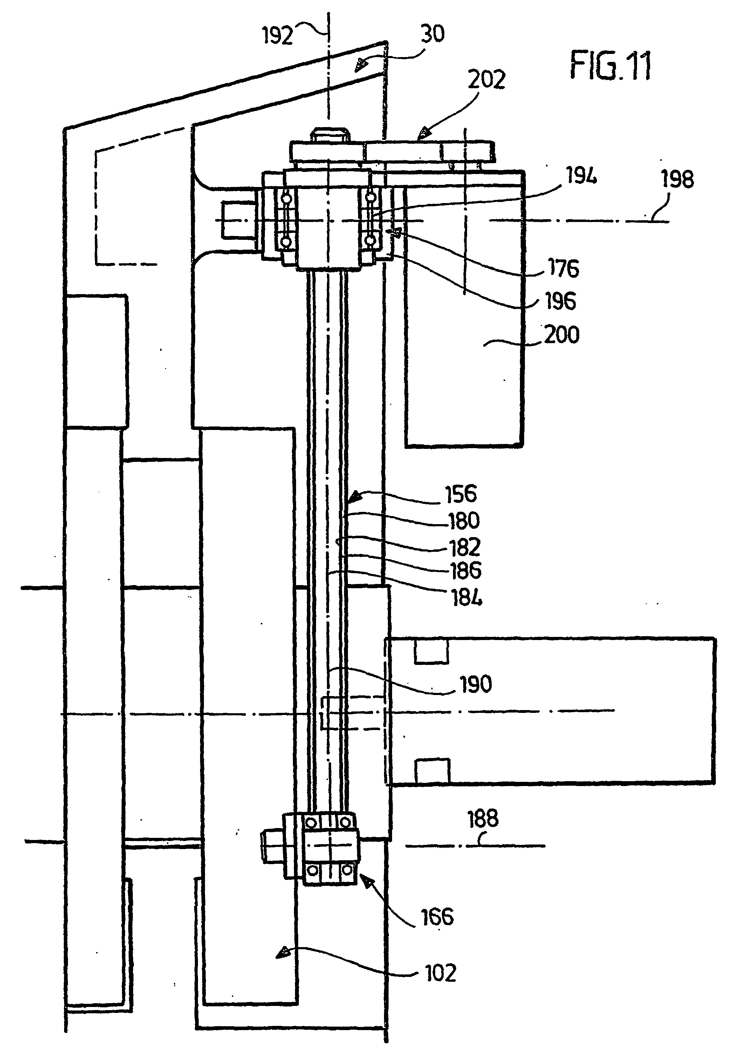

Jede der Antriebsstreben 152, 154 und 156 umfaßt, wie in Fig. 11 am Beispiel der Antriebsstrebe 156 dargestellt, ein Außenrohr 180 mit einem Innengewinde 182, in welches eine Spindel 184 mit einem Außengewinde 186 eingeschraubt ist.

Die Spindel 184 ist dabei drehfest am Gelenkkopf 166 gehalten, der seinerseits nur um eine Drehachse 188 drehbar an dem werkzeughalterseitigen Schlittenelement 102 angreift und somit gegenüber diesem nur um die Drehachse 188 drehbar ist, wobei die Drehachse 188 senkrecht zur Kreuzschlittenbewegungsfläche 84 verläuft.

Ferner erstreckt sich die Spindel 184 mit ihrer Spindelachse 190 in einer Bewegungsebene 192, die vorzugsweise ebenfalls parallel zur Kreuzschlittenbewegungsfläche 84 angeordnet ist.

Das ebenfalls koaxial zur Spindelachse 189 verlaufende Gewinderohr 180 erstreckt sich somit ebenfalls vorzugsweise parallel zur Bewegungsebene 192 und ist seinerseits mit einem Drehlager 194 in einem Schwenkgehäuse 196 des Schwenklagers 176 gelagert, wobei das Schwenkgehäuse 196 um eine Schwenkachse 198 drehbar am Maschinenbettkörper 30 gelagert ist.

An dem Schwenkgehäuse 196 ist ferner noch ein Antrieb 200 gehalten, mit welchem über ein Zwischengetriebe 202 das Gewinderohr 180 drehbar antreibbar ist, um über die Einheit aus Gewinderohr 180 und Spindel 184 die Antriebsstrebe 156 längenverstellbar zu gestalten, d. h., daß der Abstand zwischen der fest am Maschinenbettkörper 30 angeordneten Schwenkachse 198 und der fest am werkzeughalterseitigen Schwenkelement 102 angeordneten Drehachse 188 durch Verdrehen des Gewinderohrs 180 mittels des Antriebs 200 einstellbar ist.

Die Antriebe 200 aller Antriebsstreben 152, 154, 156 sind durch eine Maschinensteuerung 104 ansteuerbar, so daß das werkzeugträgerseitige Schlittenelement 102 in alle innerhalb des Bewegungsbereichs BW liegende Stellungen relativ zum maschinenbettseitigen Schlittenelement bringbar ist.

Zum Bewegen des werkzeugträgerseitigen Schlittenelements 102 relativ zum maschinenbettseitigen Schlittenelement 62 sind die Antriebsstreben 152, 154 und 156 so angeordnet, daß sich eine Längsrichtung 212, längs welcher die Antriebsstrebe 152 längenverstellbar ist, quer zu Längsrichtungen 214 und 216 erstreckt, längs welchen die Antriebsstreben 154 und 156 längenverstellbar sind, und zwar in allen Stellungen des werkzeugträgerseitigen Schlittenelements 102 relativ zum maschinenbettseitigen Schlittenelement 62.

Ferner sind vorzugsweise die Schwenkachsen 198 der Schwenklager 174 und 176 längs einer Linie 218 angeordnet und die Drehachsen 188 am werkzeughalterseitigen Schlittenelement 102 längs einer Linie 220, wobei vorzugsweise auch noch die Schwenkachsen 198 der Schwenklager 174 und 176 denselben Abstand voneinander aufweisen wie die Drehachsen 188 der Gelenkköpfe 164 und 166.

Werden ferner die Antriebe 200 der Antriebsstreben 154 und 156 durch die Maschinensteuerung 204 so angesteuert, daß diese synchron miteinander stets denselben Abstand zwischen der Schwenkachse 198 und der Drehachse 188 bewirken, so bilden die beiden Antriebsstreben 154 und 156 eine Parallelführung, die dafür sorgt, daß die Linie 220 stets parallel zur Linie 218 verläuft.

Besonders vorteilhaft ist es dabei, wenn die Linie 218 parallel zur Spindelachse 36 und somit parallel zur Z-Achse ausgerichtet ist.

Eine derartige Parallelführung mittels der Antriebsstreben 154 und 156 bewirkt, daß das werkzeugträgerseitige Schlittenelement 102 stets in zueinander parallele Stellungen bewegbar ist, da die Linie 220 in allen möglichen Stellungen des werkzeugträgerseitigen Schlittenelements 102 parallel zur Linie 218 verläuft.

Die möglichen, beispielsweise durch die Größe des Durchbruchs 66 vorgegebenen und innerhalb des Bewegungsbereichs BW liegenden Stellungen des werkzeugträgerseitigen Schlittenelements 102 relativ zum maschinenbettseitigen Schlittenelement 62 sind nun dadurch erreichbar, daß die Längen der Antriebsstreben 154 und 156 von der Maschinensteuerung 204 synchron geändert werden, woraus primär eine Bewegung in X-Richtung resultiert, allerdings keine geradlinige Bewegung, sondern eine Bewegung längs einer gekrümmten Linie 222, welche einem Kreisbogen entspricht, den die Drehachse 188 des Gelenkkopfes 162 bei ihrer Bewegung um die Schwenkachse 198 des Schwenklagers 172 beschreibt.

Soll daher eine geradlinige Bewegung in X-Richtung erfolgen, kann die Länge der Antriebsstrebe 152 nicht konstant gehalten werden, sondern muß ebenfalls von der Maschinensteuerung 204 gleichzeitig verändert werden.

Andererseits bewirkt eine Längenveränderung der Antriebsstrebe 152 durch die Maschinensteuerung 204 primär eine Bewegung in Z-Richtung, wobei bei unveränderlicher Länge der Antriebsstreben 154 und 156 die Bewegung längs einer Bahn 224 erfolgt, die einem Kreisbogen entspricht, welchen die Drehachse 188 beispielsweise des Gelenkkopfes 166 um die Schwenkachse 198 de's Schwenklagers 176 beschreibt. Soll daher eine geradlinige Bewegung in Z-Richtung erfolgen, so ist zusätzlich zur Variation der Länge der Antriebsstrebe 152 noch die Länge der Antriebsstreben 154 und 156 durch die Maschinensteuerung 204 zu variieren, welche sämtliche Antriebe 200 sämtlicher Antriebsstreben 152, 154 und 156 koordiniert ansteuert.

## Patentansprüche

1. Werkzeugmaschine zum Bearbeiten eines Werkstücks (38) durch eine Relativbewegung zwischen dem Werkstück (38) und einem Werkzeug (48), umfassend ein Maschinengestell (10), einen am Maschinengestell (10) angeordneten Träger mit einer ersten Aufnahme (34) für das Werkstück (38) oder das Werkzeug (48), ein am Maschinengestell angeordnetes Kreuzschlittensystem (60), welches zwei Schlittenelemente (62, 102) umfaßt, von denen eines am Maschinengestell (10) abgestützt ist und das andere eine zweite Aufnahme (40) für das Werkzeug (48) bzw. das Werkstück (38) trägt, welche durch das Kreuzschlittensystem (60) relativ zur ersten Aufnahme (34) in Richtung zweier, quer zueinander verlaufender Kreuzschlittenbewegungsachsen (X, Z) in einem durch Maximalwege in diesen Kreuzschlittenbewegungsrichtungen (X, Z) festgelegten Bewegungsbereich einer Kreuzschlittenbewegungsfläche (84) bewegbar ist,
**dadurch gekennzeichnet, daß** die Schlittenelemente (62, 102) aneinander durch eine einzige in Richtung beider Kreuzschlittenbewegungsachsen (X, Z) bewegbare zweidimensionale Führung (80, 82, 90, 92, 110, 112, 120, 122) bewegbar geführt sind, welche die Präzision der Führung der zweiten Aufnahme (40) parallel zur Kreuzschlittenbewegungsfläche (84) bestimmt, und daß eine Antriebsvorrichtung (150) vorgesehen ist, mit welcher das die zweite Aufnahme (40) tragende Schlittenelement (102) relativ zum anderen Schlittenelement (62) in den beiden Kreuzschlittenbewegungsrichtungen (X, Z) mit definierter Ausrichtung der Schlittenelemente (62, 102) zueinander bewegbar und festlegbar ist, und daß die Antriebsvorrichtung (150) auf einer der zweiten Aufnahme (40) gegenüberliegenden Seite des am Maschinengestell (10) abgestützten Schlittenelements (62) angeordnet ist.

2. Werkzeugmaschine nach Anspruch 1, **dadurch gekennzeichnet, daß** ein erstes der Schlittenelemente (62, 62', 102", 62'") mindestens eine sich parallel zur Kreuzschlittenbewegungsfläche (84) erstreckende Führungsoberfläche (80, 82, 90, 92) aufweist und daß ein zweites der Schlittenelemente (102, 102', 62", 102'") mit mindestens einem Stützelement (110, 112, 120, 122) auf dieser Führungsoberfläche (80, 82, 90, 92) abgestützt ist.

3. Werkzeugmaschine nach Anspruch 2, **dadurch gekennzeichnet, daß** eine Flächenausdehnung der Führungsoberfläche (80, 82, 90, 92) in Richtung der Kreuzschlittenbewegungsrichtungen (X, Z) mindestens der Flächenausdehnung des Bewegungsbereichs (BW) entspricht.

4. Werkzeugmaschine nach Anspruch 2 oder 3, **dadurch gekennzeichnet, daß** das erste Schlittenelement (62, 62', 102", 62'") zwei im Abstand voneinander angeordnete Führungsoberflächen (80, 82, 90, 92) aufweist.

5. Werkzeugmaschine nach einem der Ansprüche 2 bis 4, **dadurch gekennzeichnet, daß** die Flächenausdehnung eines kraftbeaufschlagten Bereichs der Führungsoberfläche (80, 82, 90, 92) in allen Stellungen der Schlittenelemente (62, 102) relativ zueinander ungefähr gleich groß ist.

6. Werkzeugmaschine nach Anspruch 5, **dadurch gekennzeichnet, daß** die Flächenausdehnung des kraftbeaufschlagten Bereichs der Führungsoberfläche (80, 82, 90, 92) durch die Ausbildung des Stützelements (110, 112, 120, 122) vorgegeben ist und daß die Flächenausdehnung der Führungsoberfläche (80, 82, 90, 92) so groß ist, daß in allen Stellungen der Schlittenelemente (62, 102) relativ zueinander das Stützelement (110, 112, 120, 122) mit derselben Flächenausdehnung auf die Führungsoberfläche (80, 82, 90, 92) wirkt.

7. Werkzeugmaschine nach einem der Ansprüche 2 bis 6, **dadurch gekennzeichnet, daß** mindestens eines der Stützelemente (110, 112, 120, 122) relativ zum zweiten Schlittenelement (102, 102', 62", 102'") einstellbar ist.

8. Werkzeugmaschine nach einem der voranstehenden Ansprüche, **dadurch gekennzeichnet, daß** die mindestens eine sich parallel zur Kreuzschlittenbewegungsfläche (84) erstreckende Führungsoberfläche als mindestens eine Gleitoberfläche (80, 82, 90, 92) ausgebildet ist und daß das zweite Schlittenelement durch mindestens eine auf der mindestens einen Gleitoberfläche (80, 82, 90, 92) aufliegende Gleitstützfläche (116) des Stützelements (110, 112, 120, 122) relativ zur Kreuzschlittenbewegungsfläche (84) kippfest, jedoch in dieser zweidimensional verschiebbar geführt ist.

9. Werkzeugmaschine nach Anspruch 8, **dadurch gekennzeichnet, daß** die Gleitstützfläche (116) eine kleinere Flächenausdehnung aufweist als die Gleitoberfläche (80, 82, 90, 92) und daß die Gleitstützfläche (116) in jeder Stellung der Schlittenelemente (62, 102) relativ zueinander vollflächig auf der Gleitoberfläche (80, 82, 90, 92) aufliegt.

10. Werkzeugmaschine nach einem der Ansprüche 2 bis 9, **dadurch gekennzeichnet, daß** das Stützelement (110, 112) an dem die zweite Aufnahme (40) tragenden Schlittenelement (102) angeordnet ist.

11. Werkzeugmaschine nach einem der voranstehenden Ansprüche, **dadurch gekennzeichnet, daß** die Kreuzschlittenbewegungsfläche (84) parallel zu einer durch eine X-Achse und eine Z-Achse der Werkzeugmaschine aufgespannte Bewegungsebene (78) verläuft.

12. Werkzeugmaschine nach einem der voranstehenden Ansprüche, **dadurch gekennzeichnet, daß** Führungsflächen (80, 82, 90, 92) des am Maschinengestell (10) abgestützten Schlittenelements (62, 62', 62"') beiderseits eines Durchbruchs (66) liegen, welche ein Basiskörper (106) des die zweite Aufnahme (40) tragenden Schlittenelements (102) durchsetzt.

13. Werkzeugmaschine nach einem der voranstehenden Ansprüche, **dadurch gekennzeichnet, daß** ein Antrieb (128) für die zweite Aufnahme (40) auf einer der zweiten Aufnahme (40) gegenüberliegenden Seite des dem Durchbruch (66) durchsetzenden Basiskörpers (106) des die zweite Aufnahme (40) tragenden Schlittenelements (102) liegt.

14. Werkzeugmaschine nach einem der voranstehenden Ansprüche, **dadurch gekennzeichnet, daß** die eine Aufnahme als Werkstückspindel (34) und die andere Aufnahme als Werkzeugträger (40) ausgebildet ist..

15. Werkzeugmaschine nach Anspruch 14, **dadurch gekennzeichnet, daß** die Kreuzschlittenbewegungsfläche (84) parallel zu einer Spindelachse (36) der als Werkstückspindel (34) ausgebildeten Aufnahme und parallel zu einer Richtung quer zur Spindelachse (36) verläuft.

16. Werkzeugmaschine nach einem der voranstehenden Ansprüche, **dadurch gekennzeichnet, daß** eine Niederhalteeinrichtung (130) vorgesehen ist, welche das mindestens eine Stützelement (110, 112, 120, 122) an der mindestens einen Führungsoberfläche (80, 82, 90, 92) in Anlage hält.

17. Werkzeugmaschine nach Anspruch 16, **dadurch gekennzeichnet, daß** die Niederhalteeinrichtung (130') das Stützelement (110, 112, 120, 122) an der Führungsoberfläche (80, 82, 90, 92) durch Kraftbeaufschlagung in Anlage hält.

18. Werkzeugmaschine nach Anspruch 17, **dadurch gekennzeichnet, daß** die Niederhalteeinrichtung (130) mindestens eine weitere, sich parallel zur Kreuzschlittenbewegungsfläche (84) erstreckende Führungsoberfläche (90, 92, 140) aufweist, deren Flächenausdehnung in Richtung der Kreuzschlittenbewegungsrichtungen (X, Z) mindestens der Flächenausdehnung des Bewegungsbereichs (BW) entspricht, und ein weiteres Stützelement (134) aufweist, welches auf die Führungsoberfläche (140) wirkt.

19. Werkzeugmaschine nach Anspruch 18, **dadurch gekennzeichnet, daß** die weitere Führungsoberfläche (90, 92) an dem ersten Schlittenelement (62, 62', 102") angeordnet ist und das weitere Stützelement (120, 122, 110', 112') an dem zweiten Schlittenelement (102, 102', 62").

20. Werkzeugmaschine nach Anspruch 19, **dadurch gekennzeichnet, daß** das erste Schlittenelement (62, 102") auf einer Seite mit der Fürrungsoberfläche (80, 82) versehen ist und auf einer gegenüberliegenden Seite mit der weiteren Führungsoberfläche (90, 92).

21. Werkzeugmaschine nach Anspruch 19, **dadurch gekennzeichnet, daß** die Führungsoberfläche (80, 82) und die weitere Führungsoberfläche (90, 92) einander zugewandt an einem Grundkörper (64a, 64b) des ersten Schlittenelements (62') angeordnet sind.

22. Werkzeugmaschine nach einem der voranstehenden Ansprüche, **dadurch gekennzeichnet, daß** die Antriebsvorrichtung (150) auf einer der zweiten Aufnahme (40) gegenüberliegenden Seite des die zweite Aufnahme (40) tragenden Schlittenelements (102) angreift.

23. Werkzeugmaschine nach einem der voranstehenden Ansprüche, **dadurch gekennzeichnet, daß** die Antriebsvorrichtung (150) auf einer der zweiten Aufnahme (40) gegenüberliegenden Seite eines Maschinenbettkörpers (50 angeordnet ist, an welchem das am Maschinengestell (10) abgestützte Schlittenelement (62) fixiert ist.

24. Werkzeugmaschine nach einem der voranstehenden Ansprüche, **dadurch gekennzeichnet, daß** die Antriebsvorrichtung (150) so ausgebildet ist, daß sie die Schlittenelemente (62, 102) stets in derselben Ausrichtung relativ zueinander bewegt.

25. Werkzeugmaschine nach Anspruch 24, **dadurch gekennzeichnet, daß** die Antriebsvorrichtung (150) eine zumindest teilweise mechanische Parallelführung für die Schlittenelemente (62, 102) bildet.

26. Werkzeugmaschine nach Anspruch 24 oder 25, **dadurch gekennzeichnet, daß** die Antriebsvorrichtung (150) an dem die zweite Aufnahme (40) tragenden Schlittenelement (102) an mindestens zwei im Abstand voneinander angeordneten Angriffspunkten (188) mit drei sich in mindestens zwei verschiedenen Richtung erstreckenden und durch eine Maschinensteuerung (204) ansteuerbare Antriebsstreben (152, 154, 156) mit einem Gelenkkopf (162, 164, 166) angreift und daß die Angriffspunkte (188) mittels der drei Antriebsstreben (152, 154, 156) relativ zum ersten Schlittenelement (62) definiert positionierbar sind.

27. Werkzeugmaschine nach Anspruch 26, **dadurch gekennzeichnet, daß** jede der Antriebsstreben (152, 154, 156) ihrerseits wiederum gelenkig mit einem Schwenklager (172, 174, 176) relativ zum anderen Schlittenelement (62) gelagert ist und jede der Antriebsstreben (152, 154, 156) ein Linearantrieb (180, 184) zugeordnet ist.

28. Werkzeugmaschine nach Anspruch 27, **dadurch gekennzeichnet, daß** die Schwenklager (172, 174, 176) relativ zum anderen Schlittenelement (62) stationär angeordnet sind und daß die Antriebsstreben (152, 154, 156) mittels des zugeordneten Linearantriebs (180, 184) längenvariabel ausgebildet sind.

29. Werkzeugmaschine nach Anspruch 28, **dadurch gekennzeichnet, daß** die Antriebsstreben (152, 154, 156) mittels eines Spindelantriebs (180, 184) längenvariabel einstellbar sind.

30. Werkzeugmaschine nach Anspruch 28 oder 29, **dadurch gekennzeichnet, daß** ein Antriebsmotor (200) für den Linearantrieb (180, 184) im Bereich des Schwenklagers (172, 174, 176) angeordnet ist.

31. Werkzeugmaschine nach einem der Ansprüche 28 bis 30, **dadurch gekennzeichnet, daß** zwei der Antriebsstreben (154, 156) eine Parallelogrammführung bilden.

32. Werkzeugmaschine nach Anspruch 31, **dadurch gekennzeichnet, daß** die Antriebsstreben (154, 156) durch die Maschinensteuerung (204) synchron längeneinstellbar sind.

## Claims

1. Machine tool for the machining of a workpiece (38) by way of a relative movement between the workpiece (38) and a tool (48), comprising a machine frame (10), a support arranged on the machine frame (10) and having a first receiving means (34) for the workpiece (38) or the tool (48), a cross slide system (60) arranged on the machine frame and comprising two slide elements (62, 102), one of said elements being supported on the machine frame (10) and the other bearing a second receiving means (40) for the tool (48) or the workpiece (38), said receiving means (40) being movable by the cross slide system (60) relative to the first receiving means (34) in the direction of two cross slide movement axes (X, Z) extending transversely to one another in a movement zone of a cross slide movement surface (84) determined by maximum paths in these cross slide movement directions (X, Z), **characterized in that** the slide elements (62, 102) are guided so as to be movable on one another by a single two-dimensional guide means (80, 82, 90, 92, 110, 112, 120, 122) movable in the direction of both cross slide movement axes (X, Z), said guide means determining the precision of the guidance of the second receiving means (40) parallel to the cross slide movement surface (84), and that a drive device (150) is provided, said drive device enabling the slide element (102) bearing the second receiving means (40) to be moved and fixed in position relative to the other slide element (62) in the two cross slide movement directions (X, Z) with a defined alignment of the slide elements (62, 102) relative to one another, and that the drive device (150) is arranged on a side of the slide element (62) supported on the machine frame (10) located opposite the second receiving means (40).

2. Machine tool as defined in claim 1, **characterized in that** a first one of the slide elements (62, 62', 102", 62'") has at least one guide surface (80, 82, 90, 92) extending parallel to the cross slide movement surface (84), and that a second one of the slide elements (102, 102', 62", 102"') is supported on this guide surface (80, 82, 90, 92) with at least one supporting element (110, 112, 120, 122).

3. Machine tool as defined in claim 2, **characterized in that** an areal extent of the guide surface (80, 82, 90, 92) in the direction of the cross slide movement directions (X, Z) corresponds at least to the areal extent of the movement zone (BW).

4. Machine tool as defined in claim 2 or 3, **characterized in that** the first slide element (62, 62', 102", 62'") has two guide surfaces (80, 82, 90, 92) arranged at a distance from one another.

5. Machine tool as defined in any one of claims 2 to 4, **characterized in that** the areal extent of an area of the guide surface (80, 82, 90, 92) acted upon with a force is approximately of the same size in all the positions of the slide elements (62, 102) relative to one another.

6. Machine tool as defined in claim 5, **characterized in that** the areal extent of the area of the guide surface (80, 82, 90, 92) acted upon with a force is predetermined by the design of the supporting element (110, 112, 120, 122), and that the areal extent of the guide surface (80, 82, 90, 92) is of such a size that in all the positions of the slide elements (62, 102) relative to one another the supporting element (110, 112, 120, 122) acts on the guide surface (80, 82, 90, 92) with the same areal extent.

7. Machine tool as defined in any one of claims 2 to 6, **characterized in that** at least one of the supporting elements (110, 112, 120, 122) is adjustable relative to the second slide element (102, 102', 62", 102"').

8. Machine tool as defined in any one of the preceding claims, **characterized in that** the at least one guide surface extending parallel to the cross slide movement surface (84) is designed as at least one sliding surface (80, 82, 90, 92), and that the second slide element is guided by at least one sliding support surface (116) of the supporting element (110, 112, 120, 122) resting on the at least one sliding surface (80, 82, 90, 92) so as to be non-tiltable relative to the cross slide movement surface (84) but displaceable therein two-dimensionally.

9. Machine tool as defined in claim 8, **characterized in that** the sliding support surface (116) has a smaller areal extent than the sliding surface (80, 82, 90, 92), and that the sliding support surface (116) rests on the sliding surface (80, 82, 90, 92) over its entire area in each position of the slide elements (62, 102) relative to one another.

10. Machine tool as defined in any one of claims 2 to 9, **characterized in that** the supporting element (110, 112) is arranged on the slide element (102) bearing the second receiving means (40).

11. Machine tool as defined in any one of the preceding claims, **characterized in that** the cross slide movement surface (84) extends parallel to a plane of movement (78) defined by an X axis and a Z axis of the machine tool.

12. Machine tool as defined in any one of the preceding claims, **characterized in that** guide surfaces (80, 82, 90, 92) of the slide element (62, 62', 62"') supported on the machine frame (10) are located on both sides of an opening (66) through which a base member (106) of the slide element (102) bearing the second receiving means (40) passes.

13. Machine tool as defined in any one of the preceding claims, **characterized in that** a drive (128) for the second receiving means (40) is located on a side, located opposite the second receiving means (40), of the base member (106), passing through the opening (66), of the slide element (102) bearing the second receiving means (40).

14. Machine tool as defined in any one of the preceding claims, **characterized in that** the one receiving means is designed as a workpiece spindle (34) and the other receiving means as a tool carrier (40).

15. Machine tool as defined in claim 14, **characterized in that** the cross slide movement surface (84) extends parallel to a spindle axis (36) of the receiving means designed as a workpiece spindle (34) and parallel to a direction transverse to the spindle axis (36).

16. Machine tool as defined in any one of the preceding claims, **characterized in that** a holding down device (130) is provided for keeping the at least one supporting element (110, 112, 120, 122) in contact with the at least one guide surface (80, 82, 90, 92).

17. Machine tool as defined in claim 16, **characterized in that** the holding down device (130') keeps the supporting element (110, 112, 120, 122) in contact with the guide surface (80, 82, 90, 92) by acting upon it with a force.

18. Machine tool as defined in claim 17, **characterized in that** the holding down device (130) has at least one further guide surface (90, 92, 140) extending parallel to the cross slide movement surface (84), the areal extent of said further surface in the direction of the cross slide movement directions (X, Z) corresponding at least to the areal extent of the movement zone (BW), and has a further supporting element (134) acting on the guide surface (140).

19. Machine tool as defined in claim 18, **characterized in that** the further guide surface (90, 92) is arranged on the first slide element (62, 62', 102"), and the further supporting element (120, 122, 110', 112') on the second slide element (102, 102', 62").

20. Machine tool as defined in claim 19, **characterized in that** the first slide element (62, 102") is provided with the guide surface (80, 82) on one side and with the further guide surface (90, 92) on an opposite side.

21. Machine tool as defined in claim 19, **characterized in that** the guide surface (80, 82) and the further guide surface (90, 92) are arranged on a base member (64a, 64b) of the first slide element (62') so as to face one another.

22. Machine tool as defined in any one of the preceding claims, **characterized in that** the drive device (150) engages on a side, located opposite the second receiving means (40), of the slide element (102) bearing the second receiving means (40).

23. Machine tool as defined in any one of the preceding claims, **characterized in that** the drive device (150) is arranged on a side, located opposite the second receiving means (40), of a machine base member (50) on which the slide element (62) supported on the machine frame (10) is fixed.

24. Machine tool as defined in any one of the preceding claims, **characterized in that** the drive device (150) is designed such that it always moves the slide elements (62, 102) in the same alignment relative to one another.

25. Machine tool as defined in claim 24, **characterized in that** the drive device (150) forms an at least partial mechanical parallel guide means for the slide elements (62, 102).

26. Machine tool as defined in claim 24 or 25, **characterized in that** the drive device (150) engages on the slide element (102) bearing the second receiving means (40) at at least two points of engagement (188) arranged at a distance from one another with three drive arms (152, 154, 156) with an articulated head (162, 164, 166), which extend in at least two different directions and are activatable by a machine control (204), and that the points of engagement (188) are positionable in a defined manner relative to the first slide element (62) by means of the three drive arms (152, 154, 156).

27. Machine tool as defined in claim 26, **characterized in that** each of the drive arms (152, 154, 156) is, for its part, articulatedly mounted with a pivot bearing (172, 174, 176) relative to the other slide element (62), and a linear drive (180, 184) is associated with each of the drive arms (152, 154, 156).

28. Machine tool as defined in claim 27, **characterized in that** the pivot bearings (172, 174, 176) are arranged so as to be stationary relative to the other slide element (62), and that the drive arms (152, 154, 156) are designed to be variable in length by means of the associated linear drive (180, 184).

29. Machine tool as defined in claim 28, **characterized in that** the drive arms (152, 154, 156) are adjustable by means of a spindle drive (180, 184) so as to be variable in length.

30. Machine tool as defined in claim 28 or 29, **characterized in that** a drive motor (200) for the linear drive (180, 184) is arranged in the region of the pivot bearing (172, 174, 176).

31. Machine tool as defined in any one of claims 28 to 30, **characterized in that** two of the drive arms (154, 156) form a parallelogram guide means.

32. Machine tool as defined in claim 31, **characterized in that** the drive arms (154, 156) are synchronously adjustable in length by the machine control (204).

## Revendications

1. Machine-outil pour l'usinage d'une pièce à usiner (38) au moyen d'un déplacement relatif entre la pièce à usiner (38) et un outil (48), comprenant un bâti de machine (10), un support disposé sur le bâti de machine (10) et comportant un premier logement (34) pour la pièce (38) ou pour l'outil (48), un système à chariots croisés (60) disposé sur le bâti de machine et qui comporte deux éléments de chariots (62, 102), dont l'un prend appui sur le bâti de machine (10) et dont l'autre porte un second logement (40) pour l'outil (48) ou la pièce à usiner (38), et qui est déplaçable au moyen du système à chariots croisés (60) par rapport au premier logement (34) dans la direction de deux axes (X, Z) de déplacement des chariots croisés, qui sont transversaux l'un à l'autre, dans une zone de déplacement, qui est fixée par des trajets maximum dans ces directions (X, Z) de déplacement des chariots croisés, d'une surface (84) de déplacement des chariots croisés;
**caractérisé en ce que** les éléments de chariots (62, 102) sont guidés de manière à être déplaçables côte-â-côte par un seul guide bidimensionnel (80, 82, 90, 92, 110, 112, 120, 122), qui est déplaçable dans la direction des deux axes (X, Z) de déplacement des chariots croisés et détermine la précision du guidage du second logement (40) parallèlement à la surface (84) de déplacement des chariots croisé, et qu'il est prévu un dispositif d'entraînement (150) à l'aide duquel l'élément de chariot (102) qui porte le second logement (40) est déplaçable et peut être fixé par rapport à l'autre élément de chariot (62) dans les deux directions (X, Z) de déplacement des chariots croisés, avec un alignement défini des éléments de chariots (62, 102) l'un sur l'autre, et que le dispositif d'entraînement (150) est disposé sur un côté, situé à l'opposé du second logement (40), de l'élément de chariot (62) qui prend appui sur le bâti de machine (10).

2. Machine-outil selon la revendication 1, **caractérisée en ce qu'**un premier des éléments de chariots (62, 62', 62", 62"') comporte au moins une surface de guidage (80, 82, 90, 92) distante parallèlement à la surface (84) de déplacement des chariots croisés et qu'un second des éléments de chariots (102, 102', 102", 102"') prend appui par au moins un élément d'appui (110, 112, 120, 122) sur cette surface de guidage (80, 82, 90, 92).

3. Machine-outil selon la revendication 2, **caractérisée en ce qu'**une étendue de la surface de guidage (80, 82, 90, 92) dans les directions (X, Z) de déplacement des chariots croisés correspond au moins à l'étendue en surface de la zone de déplacement (BW).

4. Machine-outil selon la revendication 2 ou 3, **caractérisée en ce que** le premier élément de chariot (62, 62', 62", 62"') comporte deux surfaces de guidage (80, 82, 90, 92) situées à distance l'une de l'autre.

5. Machine-outil selon l'une des revendications 2 à 4, **caractérisée en ce que** l'étendue en surface d'une zone, chargée par une force, de la surface de guidage (80, 82,90, 92) est approximativement la même dans toutes les positions des éléments de chariot (62, 102) l'un par rapport à l'autre.

6. Machine-outil selon la revendication 5, **caractérisée en ce que** l'étendue en surface de la zone, chargée par une force, de la surface de guidage (80, 82, 90, 92) est prédéterminée par l'agencement de l'élément d'appui (110, 112, 120, 122) et que l'étendue de la surface de guidage (80, 82, 90, 92) est suffisamment étendue pour que, dans toutes les positions des éléments de chariots (62, 102) l'un par rapport à l'autre, l'élément d'appui (110, 112, 120, 122) agit avec la même étendue en surface sur la surface de guidage (80, 82, 90, 92).

7. Machine-outil selon l'une des revendications 2 à 6, **caractérisée en ce qu'**au moins l'un des éléments d'appui (110, 112, 120, 122) est réglable par rapport au second élément de chariot (102, 102', 102", 102"').

8. Machine-outil selon l'une des revendications précédentes, **caractérisée en ce que** la au moins une surface de guidage, qui s'étend parallèlement à la surface (94) de déplacement des chariots croisés, est agencée sous la forme d'au moins une surface de glissement (80, 82, 90, 92) et que le second élément de chariot est guidé par au moins une surface d'appui de glissement (116) de l'élément d'appui (110, 112, 120, 122), qui s'applique sur au moins une surface de glissement (80, 82, 90, 92), en étant bloqué contre tout basculement par rapport à la surface (84) de déplacement des chariots croisés, mais en étant déplaçable de façon bidimensionnelle dans cette surface.

9. Machine-outil selon la revendication 8, **caractérisée en ce que** la surface d'appui de glissement (116) possède une étendue en surface plus petite que la surface de glissement (80, 82, 90, 92) et que la surface d'appui de glissement (116) s'applique sur toute son étendue sur la surface de glissement (60, 82, 90, 92) pour n'importe quelle position des éléments de chariots (62, 102) l'un par rapport à l'autre.

10. Machine-outil selon l'une des revendications 2 à 9, **caractérisée en ce que** l'élément d'appui (110, 112) est disposé sur l'élément de chariot (102) qui porte le second logement (40).

11. Machine-outil selon l'une des revendications précédentes, **caractérisée en ce que** la surface (84) de déplacement des chariots croisés s'étend parallèlement à un plan de déplacement (78) qui passe par un axe X et par un axe Z de la machine-outil.

12. Machine-outil selon l'une des revendications précédentes, **caractérisée en ce que** des surfaces de guidage (80, 82, 90, 92) de l'élément de chariot (62, 62', 62"'), qui prend appui sur le bâti de machine (10) sont situées des deux côtés d'un passage (66) qui traverse un corps de base (106) de l'élément de chariot (102) qui porte le second logement (40).

13. Machine-outil selon l'une des revendications précédentes, **caractérisée en ce qu'**un dispositif d'entraînement (128) pour le second logement (40) est situé sur un côté, situé à l'opposé du second logement (40), du corps de base (106), qui traverse le passage (66), de l'élément de chariot (102) portant le second logement (40).

14. Machine-outil selon l'une des revendications précédentes, **caractérisée en ce qu'**un logement est agencé sous la forme d'une broche porte-pièce (38) et l'autre logement est agencé sous la forme d'un porte-outil (40).

15. Machine-outil selon la revendication 14, **caractérisée en ce que** la surface (84) de déplacement en croix s'étend parallèlement à un axe de broche (36) du logement réalisé sous la forme d'une broche porte-pièce (34) et parallèlement à une direction transversale par rapport à l'axe (36) de la broche.

16. Machine-outil selon l'une des revendications précédentes, **caractérisée en ce qu'**il est prévu un dispositif de serrage (130), qui maintient le au moins l'élément d'appui (110, 112, 120, 122) appliqué contre la au moins une surface de guidage (80, 82,90, 92).

17. Machine-outil selon la revendication 16, **caractérisée en ce que** le dispositif de serrage (130') maintient l'élément d'appui (110, 112, 120, 122) au moyen de l'application d'une force, sur la surface de guidage (80, B2, 90, 92).

18. Machine-outil selon la revendication 17, **caractérisée en ce que** le dispositif de serrage (130) comporte au moins une autre surface de guidage (90, 92, 140) qui s'étend parallèlement à la surface (84) de déplacement des chariots croisés et dont l'étendue en surface dans la direction (X, Z) de déplacement des chariots croisés correspond au moins à l'étendue en surface de la zone de déplacement (BW) et comporte un autre élément d'appui (134), qui agit sur la surface de guidage (140).

19. Machine-outil selon la revendication 18, **caractérisée en ce que** l'autre surface de guidage (90, 92) est disposée sur le premier élément de chariot (62, 62', 62") et que l'autre élément d'appui (120, 122, 110', 112') est disposé sur le second élément de chariot (62, 62', 62").

20. Machine-outil selon la revendication 19, **caractérisée en ce que** le premier élément de chariot (62, 62") comporte, d'un côté, la surface de guidage (80, 82) et comporte, sur un côté opposé, l'autre surface de guidage (90, 92).

21. Machine-outil selon la revendication 19, **caractérisée en ce que** la surface de guidage (80, 82) et l'autre surface de guidage (90, 92) sont disposées, en étant tournées l'une vers l'autre, sur un corps de base (64a, 64b) du premier élément de chariot (62').

22. Machine-outil selon l'une des revendications précédentes, **caractérisée en ce que** le dispositif d'entraînement (150) attaque un côté, situé à l'opposé du second logement (40), de l'élément de chariot (102) portant le second logement (40).

23. Machine-outil selon l'une des revendications précédentes, **caractérisée en ce que** le dispositif d'entraînement (150) est disposé sur un côté du corps de bâti (50) de la machine, qui est situé à l'opposé du second logement (40) et sur lequel est fixé l'élément de chariot (62) qui prend appui sur le bâti de machine (10).

24. Machine-outil selon l'une des revendications précédentes, **caractérisée en ce que** le dispositif d'entraînement (150) est agencé de telle sorte qu'il déplace les éléments de chariot (62, 102) en permanence avec la même orientation l'un par rapport à l'autre.

25. Machine-outil selon la revendication 24, **caractérisée en ce que** le dispositif d'entraînement (150) forme au moins un système de guidage parallèle au moins partiellement mécanique pour les éléments de chariots (62, 102).

26. Machine-outil selon la revendication 24 ou 25, **caractérisée en ce que** le dispositif d'entraînement (150) attaque l'élément de chariot (102) qui porte le second logement (40) en au moins deux points d'attaque (188) situés à distance l'un de l'autre au moyen de trois entretoises d'entraînement (152, 154, 156), qui s'étendent dans au moins deux directions différentes et peuvent être commandées par une unité (204) de commande de la machine, avec une tête d'articulation (162, 164, 166) et que les points d'attaque (188) peuvent être positionnés d'une manière définie au moyen des trois entretoises d'entraînement (152, 154, 156) d'une manière définie par rapport au premier élément de chariot (62).

27. Machine-outil selon la revendication 26, **caractérisée en ce que** chacune des entretoises d'entraînement (152, 154, 156) est montée pour sa part à nouveau d'une manière articulée à l'aide d'un palier pivotant (172, 174, 176) par rapport à l'autre élément de chariot (62) et dans laquelle chacune des entretoises d'entraînement (152, 154, 156) est associée à un dispositif d'entraînement linéaire (180, 184).

28. Machine-outil selon la revendication 27, **caractérisée en ce que** les paliers pivotants (172, 174,176) sont disposés de façon fixe par rapport à l'autre élément de chariot (169) et que les entretoises d'entraînement (152, 154, 156) sont agencées de manière à avoir une longueur variable, au moyen du dispositif d'entraînement linéaire associé (180, 184).

29. Machine-outil selon la revendication 28, **caractérisée en ce que** les entretoises d'entraînement (152, 154, 156) sont réglables avec une longueur variable à l'aide du dispositif d'entraînement à broche (180, 184).

30. Machine-outil selon la revendication 28 ou 29, **caractérisée en ce qu'**un moteur électrique (200) pour le dispositif d'entraînement linéaire (180, 184) est disposé au niveau du palier pivotant (172, 174, 176).

31. Machine-outil selon l'une des revendications 28 à 30, **caractérisée en ce que** deux des entretoises d'entraînement (154, 156) forment un guide en forme de parallélogramme.

32. Machine-outil selon la revendication 31, **caractérisée en ce que** les données des entretoises d'entraînement (154, 156) sont réglables en longueur d'une manière synchrone par l'unité (204) de commande de la machine.
